# EUROPÄISCHE PATENTANMELDUNG

(11) **EP 4 047 234 A1**
(43) Veröffentlichungstag der Anmeldung: **24.08.2022**
(21) Anmeldenummer: 21157894.3
(22) Anmeldetag: 18.02.2021
(51) Int. Cl.: F16D 11/00, F16D 15/00

(54) **KLAUENKUPPLUNG ZUR ÜBERTRAGUNG VON DREHMOMENTEN**

(71) Anmelder: Centa-Antriebe Kirschey GmbH, 42781 Haan (DE)
(72) Erfinder: CZEMPIK, René, 50259 Pulheim (DE)
(74) Vertreter: V.O.

(57) **Zusammenfassung**

Vorliegende Erfindung betrifft eine Klauenkupplung zur Übertragung von Drehmomenten von einem Antrieb (11) zu einem Abtrieb (21), mit einem, dem Antrieb (11) zugeordneten ersten Kupplungselement (10), das über einen ersten Außenumfang (U₁₀) verteilte und zueinander beabstandete erste Klauen (12) trägt, und einem, dem Abtrieb (21) zugeordneten zweiten Kupplungselement (20), das optional über einen zweiten Außenumfang (U₁₀) verteilte und zueinander beabstandete zweite Klauen (22) trägt, wobei sich die ersten und zweiten Klauen (12, 22) jeweils in einer Axialrichtung A_{R10}, _{AR20} erstrecken und abwechselnd miteinander in Kämmung stehen, wobei an einer Mehrzahl in Umfangsrichtung R_{U10}, R_{U20} sich gegenüberliegenden ersten und zweiten Radialflächen (13, 23), der benachbarten ersten und zweiten Klauen (12, 22), erste und zweite Koppelelementaufnahmen (14, 24) ausgebildet sind, in denen wenigstens ein, optional genau ein Koppelelement (50) sitzt, das die jeweiligen ersten und zweiten Kupplungselemente (10, 20) in Drehmomentrichtung R_{M10}, R_{M20} kraftschlüssig miteinander koppelt, wobei die ersten und zweiten Koppelelementaufnahmen (14, 24) als axial verlaufende und in Radialrichtung gekrümmte Koppelbahnen (14, 24) ausgebildet, in denen das Koppelelement (50) wenigstens in Axialrichtung A_{R10}, _{AR20} frei bewegbar gelagert ist.

## Beschreibung

Vorliegende Erfindung betrifft eine Klauenkupplung zur Übertragung von Drehmomenten von einem Antrieb zu einem Abtrieb, mit einem, dem Antrieb zugeordneten ersten Kupplungselement, das optional über einen ersten Außenumfang verteilte und zueinander beabstandete erste Klauen trägt, und einem, dem Abtrieb zugeordneten zweiten Kupplungselement, das optional über einen zweiten Außenumfang verteilte und zueinander beabstandete zweite Klauen trägt, wobei sich die ersten und zweiten Klauen jeweils in einer Axialrichtung A_{R10}, A_{R20} erstrecken und abwechselnd miteinander in Kämmung stehen, wobei an einer Mehrzahl in Umfangsrichtung R_{U10}, R_{U20} sich gegenüberliegenden ersten und zweiten Radialflächen, der benachbarten ersten und zweiten Klauen, erste und zweite Koppelelementaufnahmen ausgebildet sind, in denen jeweils wenigstens ein, optional genau ein, Koppelelement sitzt, das die jeweiligen ersten und zweiten Kupplungselemente in Drehmomentenrichtung R_{M10}, R_{M20} kraftschlüssig miteinander koppelt.

Solche Klauenkupplungen sind aus dem Stand der Technik bekannt. Sie dienen einen zuverlässigen Drehmomentenübertragung und erlauben darüber hinaus den Ausgleich von Axialversatz und Winkelversatz.

Axialversatz bedeutet im Umfang der Erfindung eine zur gemeinsamen Rotationsachse radial versetzte Positionierung der beiden in Eingriff stehenden Kupplungselemente bzw. ein Versatz der jeweiligen Rotationsachsen der Kupplungselemente in Radialrichtung zueinander. Winkelversatz bedeutet die zueinander geneigte Anordnung der Rotationsachsen A_{R10}, A_{R20} der Kupplungselemente, um einen Winkel α. Die zuvor beschriebenen Klauenkupplungen können einen Axialversatz und einen Winkelversatz in bestimmtem Umfang ausgleichen.

Es sind Klauenkupplungen bekannt, bei denen an den jeweiligen Klauen Koppelelementaufnahmen angebracht sind, an die beidseitig elastische Gummielemente als Koppelelemente angeschlossen sind. Die Koppelelemente stehen mit den Koppelelementaufnahmen beider benachbarter Klauen in Kraftkopplung und erlauben durch ihre Elastizität die Kompensation des Axialversatzes und des Winkelversatzes.

Insbesondere sind Klauenkupplungen bekannt, bei denen solche insbesondere elastischen Elemente an den Klauen, und insbesondere den sich relativ gegenüberliegenden Radialflächen der einzelnen Klauen, ortsfest fixiert sind und so kraftschlüssig ein Drehmoment zwischen den beiden Kupplungselementen übertragen. Die Elemente sin elastisch, um Axialversatz und/oder Winkelversatz ausgleichen zu können. Der Nachteil von solchen Konstruktionen ist die Alterung der elastischen Elemente.

Auch sind zur Kompensation von Axialversatz und Winkelversatz Lamellenkupplungen bekannt, die durch zwischen den beiden Kupplungselementen verlaufende Lamellen eine Bewegung der Rotationsachsen der beiden Kupplungselemente zueinander erlauben. Solche Kupplungen weisen jedoch hohe Rückstellkräfte auf.

Grundsätzlich leiden die aus dem Stand der Technik bekannten Kupplungen an ihrer meist sehr aufwändigen Bauweise, einer begrenzten Haltbarkeit und unter hohen Rückstellkräften. Zudem sind die ausgleichbaren Versatzwerte meist nicht ausreichend. So beträgt der maximal tolerierbare Winkelversatz bei aus dem Stand der Technik bekannten Kupplungen meist unter 2°.

Aufgabe der Erfindung ist es folglich, eine Kupplung zur Verfügung zu stellen, die eine einfache Bauweise bei optimaler Kraftübertragung mit geringen Rückstellkräften und hoher Versatzkompensation aufweist.

Diese Aufgabe wird durch eine Klauenkupplung gemäß Patentanspruch 1 gelöst.

Insbesondere wird diese Aufgabe gelöst durch eine Klauenkupplung zur Übertragung von Drehmomenten von einem Antrieb zu einem Abtrieb, mit einem ersten, dem Antrieb zugeordneten Kupplungsteil, der optional über einen ersten Außenumfang verteilte und zueinander beabstandete erste Klauen trägt, und einem zweiten, dem Abtrieb zugeordneten Kupplungsteil, der optional über einen zweiten Außenumfang verteilte und zueinander beabstandete zweite Klauen trägt, wobei sich die ersten und zweiten Klauen jeweils in Axialrichtung erstrecken und abwechselnd miteinander in Kämmung stehen, wobei an einer Mehrzahl in Umfangsrichtung gegenüberliegenden ersten und zweiten Radialflächen der benachbarten ersten und zweiten Klauen erste und zweite Koppelelementaufnahmen ausgebildet sind, in denen jeweils wenigstens ein, optional genau ein Koppelelement sitzt, das die jeweiligen ersten und zweiten Kupplungsteile in Drehmomentrichtung kraftschlüssig miteinander koppelt, wobei die ersten und zweiten Koppelelementaufnahmen als axial verlaufende und in Umgangsrichtung gekrümmte Koppelbahnen ausgebildet sind, in denen das Koppelelement wenigstens in Axialrichtung frei bewegbar gelagert ist.

Optional gilt, die Rotationsachsen A_{R10}, A_{R20} der ersten und zweiten Kupplungselemente entsprechen der Rotationsachse der Klauenkupplung, wenn kein Winkelversatz vorliegt. Die Axialrichtung erstreckt sich coaxial zur Rotationsachse A_{R10}, A_{R20} des jeweiligen Kupplungselementes. Die Rotationsachsen A_{R10}, A_{R20} sind optional Rotationssymmetrieachsen des jeweiligen ersten bzw. zweiten Kupplungselementes.

Der Außenumfang betrifft optional einen Umfang um die Rotationsachse A_{R10}, A_{R20} des Kupplungselementes. Er erstreckt sich optional auf einer Kupplungselementbasis. Er kann sich am radial äußersten Rand der Kupplungselementbasis erstrecken, aber auch davon radial nach innen beabstandet. Auf einer solchen Kupplungselementbasis sind optional die Klauen angeordnet. Sie stehen dann insbesondere orthogonal aus dieser hervor. Die Kupplungselementbasis und/oder die Klauen, und oder die Koppelbahnen sind optional rotationssymmetrisch um die Rotationsachse des jeweiligen Kupplungselementes ausgebildet bzw. angeordnet.

Kern der Erfindung ist also die Ausbildung von Koppelbahnen in den zueinanderweisenden Radialflächen der sich kämmenden Klauen und das Einsetzen wenigstens eines Koppelelements in diese jeweilige Koppelbahn, wobei das Koppelelement der Krümmungsbahn bzw. Koppelbahn folgend darin aufgenommen und insbesondere geführt aufgenommen ist.

Die beiden sich gegenüberliegenden Koppelbahnen der beiden benachbarten Klauen bilden zusammen eine Führung für das Koppelelement, das darin im Wesentlichen frei bewegbar gelagert ist. In Axialrichtung frei bewegbar bedeutet, dass das Koppelelement entlang der gekrümmten Haupterstreckungsachse der Koppelbahn und/oder durch die beiden Koppelbahnen gebildeten Führung, und optional mit einem Bewegungsvektor in Richtung der Rotationsachse der Kupplung bzw. der einzelnen Rotationsachsen der Kupplungselemente bewegbar gelagert ist. Durch die Krümmung der Führung bzw. der Koppelbahnen entsteht bei einer solchen Bewegung ein orthogonal zur Rotationsachse gerichteter Seitenbewegungsvektor, der von der Krümmung der Führung bzw. Kopplebahnen abhängt. Wie im Folgenden noch näher beschrieben, ist es auch denkbar, eine Bewegbarkeit des Koppelelementes, insbesondere in sehr geringem Masse, und insbesondere um ein Prozentsatz von bis zu 2% zur Bewegbarkeit in Richtung der gekrümmten Haupterstreckungsachse, orthogonal zu dieser zu erlauben. Eine solche Bewegbarkeit, kann als Spiel vorliegen.

Die gekrümmte Führung für das Koppelelement wird gebildet durch die ersten und zweiten Koppelelementaufnahmen bzw. Koppelbahnen, die relativ zueinander derart ausgerichtet sind, dass sie einen Aufnahmeraum bzw. einen Führungsraum für das Koppelelement bilden. Zusammen bilden die zueinanderweisenden Koppelelementaufnahmen bzw. Koppelbahnen die gekrümmte Führung.

Die Koppelbahnen der sich gegenüberliegenden Radialflächen sind optional ebenensymmetrisch zueinander ausgebildet, wobei die Symmetrieebene optional coplanar zu den Radialflächen verläuft. Es ist denkbar, die Abstände der Koppelbahnen zueinander, und insbesondere der Tiefstpunkte der Koppelbahnen, entlang der gekrümmten Haupterstreckungsachse der Koppelbahnen gleichbleibend auszubilden. Optional ist das Spiel des Koppelelementes in seiner Führung über die gekrümmte Haupterstreckungsachse betrachtet gleich. Optional sind die Koppelbahnen identisch zueinander ausgebildet. Dies gilt optional auch für die ersten und zweiten Klauen und/oder für die ersten und zweiten Kupplungselemente.

Es ist denkbar, dass, in einem Radialschnitt betrachtet (also orthogonal zur Rotationsachse), die ersten und/oder zweiten Klauen im Wesentlichen optional symmetrische Trapeze bilden und optional im Wesentlichen identisch ausgebildet sind. Darüber hinaus können Rücksprünge oder Vorsprünge an den Klauen vorgesehen sein, insbesondere um statische Erfordernisse zu erfüllen.

Die sich gegenüberliegenden Radialflächen der ersten und zweiten Klauen sind optional relativ zueinander durch einen Luftspalt beabstandet. Dieser Luftspalt erlaubt die Relativbewegung der ersten und zweiten Klauen relativ zueinander. Durch die Kopplung der ersten Koppelbahn mit der zweiten Koppelbahn über das Koppelelement, erfolgt der Drehmomentenkraftschluss zwischen ersten und zweiten Kupplungselement. Der Kraftschluss zwischen erster und zweiter Koppelbahn erfolgt optional über eine Punktlast, die von der jeweiligen Bahn auf das Kopplungselement, oder umgekehrt, übertragen wird.

Zudem ist durch diese Bewegbarkeit ein Axialversatz kompensierbar, wobei die Koppelbahnen sich relativ zueinander bewegen können, während das Koppelelement frei entlang der gekrümmten Axialrichtungen der Koppelbahnen bewegbar ist.

Aufgrund der gekrümmten Ausführung der Koppelbahnen ist neben der Axialkompensation auch eine Winkelversatzkompensation möglich. Sobald die beiden Rotationsachsen der ersten und zweiten Kupplungselemente relativ zueinander verschwenkt werden, kann über die Krümmung der Koppelbahn dieses Verschwenken durch eine entsprechende Bewegung des Kopplungselements kompensiert werden.

Wie im Folgenden noch im Detail beschrieben, hat dabei der Krümmungsradius der Koppelbahn einen entscheidenden Einfluss auf die maximale Winkelversatzkompensation.

Optional verläuft die gekrümmte Koppelbahn in einem Bogen, optional in einem Kreisbogen, und insbesondere einem Kreisbogen, dessen Mittelpunkt auf der jeweiligen Rotationsachse A_{R10}, A_{R20} des Kupplungselements liegt. Die Koppelbahn ist optional so gekrümmt, dass sie sich über die Höhe der jeweiligen Klauen, mit der sie aus einer Klauenbasis hervorstehen, von einem freien Ende betrachtet, zu einem Fußende der Klaue von vorne nach hinten und wieder nach vorne in Bezug auf den Mittelpunkt des Kupplungselements krümmen. Die Koppelbahn ist optional in Bezug die Rotationsachse des Kupplungselementes konkav oder dergleichen gebogen ausgebildet. Die Kopplungsbahn weist optional in Bezug auf die Rotationsachse wenigstens einen Scheitelpunkt Ps in Ihrem Verlauf mit parallel zur Rotationsachse verlaufender Tangente auf. Über die Höhe der Klaue betrachtet, wird optional der Abstand von der Rotationsachse zur Kopplungsbahn und insbesondere der gekrümmten (Haupt-)Erstreckungsachse der Kopplungsbahn bis zu einem Scheitelpunkt Ps der Koppelbahn größer, um dann in Richtung des Fußbereichs der Klaue wieder kleiner zu werden. Optional ist das Koppelelement als Kugel ausgebildet und insbesondere aus Metall oder Keramik ausgebildet. Hier kann anstelle von Metall oder Keramik jedes andere, entsprechend abrasive und druckfeste Material verwendet werden, sodass es von dieser Definition mit umfasst ist.

Optional gilt, dass der Radius R₁₀, R₂₀ der gekrümmten Koppelbahn größer ist als ein minimaler Innenabstand A_{IMin} einer Innenwandung der Klaue von der Rotationsachse A_{R10}, A_{R20} des Kupplungselementes und/oder kleiner ist als ein maximaler Außenabstand A_{AMax} einer Außenwandung der Klaue von der Rotationsachse A_{R10}, A_{R20} des Kupplungselementes, optional derart, dass der Radius R₁₀, R₂₀ der gekrümmten Koppelbahn größer ist als ein maximaler Innenabstand A_{IMAx} einer Innenwandung der Klaue von der Rotationsachse A_{R10}, A_{R20} des Kupplungselementes, weiter optional um wenigstens 10% größer und/oder kleiner ist als ein minimaler Außenabstand einer Außenwandung der Klaue von der Rotationsachse des Kupplungselementes, weiter optional um wenigstens 10% kleiner ist.

Die Unterscheidung zwischen minimalem Innenabstand und maximalem Innenabstand bzw. minimalem Außenabstand und maximalem Außenabstand trägt u.a. einer Ausführungsform Rechnung, bei der die Klaue, insbesondere aufgrund statischer Gesichtspunkte oder zur Gewichtsreduktion, keine lineare Entwicklung aufweist, sondern auf ihrer Oberfläche Senken oder Vorsprünge umfasst. Optional ist die Lage der Koppelbahn so gewählt, dass eine ausreichende Festigkeit der Klaue gewährleistet bleibt. Insbesondere wird aus diesem Grund eine ausreichende Materialstärke zu den Außenseiten der Klaue gewährleistet sein.

Optional gilt, dass ein Scheitelpunkt Ps der Koppelbahn ein Punkt auf einer gekrümmten Haupterstreckungsachse B_{M} der Koppelbahn ist, der zur Rotationsachse A_{R10}, A_{R20} des Kupplungselementes den größten Abstand As aufweist, und ein Endpunkt P_{E} der Koppelbahn ein Punkt auf einer gekrümmten Haupterstreckungsachse B_{M} der Koppelbahn ist, der zur Rotationsachse A_{R10}, A_{R20} des Kupplungselementes den geringsten Abstand A_{E} aufweist, wobei optional eine Verbindungsgerade V durch diese beiden Punkte P_{S}, P_{E} in einem Winkel α auf die Rotationsachse A_{R10}, A_{R20} zu bzw. von dieser weg geneigt verläuft, und wobei dieser Winkel α im Wesentlichen dem maximalen geforderten Winkelversatz β der beiden Kupplungselemente im Betrieb entspricht, optional maximal 10°, weiter optional maximal 8° entspricht.

Unter der gekrümmte Haupterstreckungsachse kann die gekrümmte Achse der Koppelbahn verstanden werden, die im Zentrum der Koppelbahn von einem Endpunkt über den Scheitelpunkt zu einem zweiten Endpunkt verläuft. Unter einem Endpunkt kann entweder das Ende einer Koppelbahn verstanden werden, optional aber der Mittelpunkt eines Koppelelements, und insbesondere einer Kugel, der das Ende dieser Koppelbahn erreicht hat. Ein solch definierter Endpunkt liegt insofern den halben Durchmesser vom tatsächlichen Endpunkt der Koppelbahn entfernt.

Über den Verlauf von Koppelbahn und Kupplungselement ist eine Definition der Höhe der Klaue über die benötigte Kompensationsfähigkeit des Winkelversatzes, also des Winkels α, möglich.

Optional ist ein Durchmesser des Koppelelements kleiner als eine minimale Breite B der Koppelbahn, insbesondere gemessen orthogonal zur gekrümmten Haupterstreckungsachse B_{M} in Richtung Krümmungsradius R₁₀, R₂₀ der gekrümmten Koppelbahn, optional um maximal 10 %, weiter optional um maximal 5 %, im Besonderen optional um maximal 2 % kleiner. Das bedeutet, dass wie zuvor bereits erwähnt, optional das Kopplungselement, und insbesondere eine Kugel, mit Spiel in den Koppelbahnen, bzw. der resultierenden Führung geführt ist. Es sei erwähnt, dass im gesamten Umfang dieser Offenbarung gilt, dass u.a. zwei Koppelbahnen eine kombinierte Führung bilden, die der Führung des Koppelelements dient. Auch diese Kombination wird hierin mitunter auch als Koppelbahn bezeichnet.

Optional gilt, insbesondere im Zusammenhang mit dem zuvor beschriebenen Spiel, dass das Koppelelement einen geringeren Umfang hat als der von den beiden sich gegenüberliegenden Koppelbahnen eingeschlossene Führungsraum, um so ein spielbehaftetes Führen des Koppelelements zu erlauben. Der Umfang des Führungsraumes kann im Orthonogalschnitt durch die gekrümmte Haupterstreckungsachse der durch die beiden Koppelbahnen gebildeten Führung ermittelt werden bzw. definiert sein.

Aufgrund der spielbehafteten Anordnung des Koppelelements in der jeweiligen Kopplungsbahn bzw. in der Führung ist eine zwängungsfreie Kompensation des Axial- und Winkelversatzes möglich.

Optional sind die Klauen derart ausgebildet, dass sie im kämmenden Zustand zwischen sich einen Luftspalt mit der Dicke d bilden, wobei gilt: Dicke d des Luftspalts = Summe der Tiefen T der sich gegenüberliegenden Koppelbahnen abzgl. Durchmesser des Koppelelements. Wie bereits erwähnt, ermöglicht der Luftspalt die zwängungsfreie Relativbewegung der benachbarten Klauen.

Optional ist der Durchmesser des Koppelelements kleiner als ein Minimalabstand von gegenüberliegenden Tiefstbereichen und erster und zweiter Koppelbahnen.

Optional ist die Radialfläche, in denen die gekrümmte Koppelbahn ausgebildet ist plan. Auch ist es möglich, dass die von der Radialfläche aufgespannte Ebene durch die Rotationsachse A_{R10}, A_{R20} des dazugehörigen Kupplungselements verläuft. Es ist denkbar, dass die Luftspalte als segmentförmige Luftspalte ausgebildet sind, wobei sie sich in Radialrichtung erweitern. Es denkbar, dass die Radialflächen ebenenparallel ausgebildet sind. Eine optional mittig zwischen diesen Radialflächen verlaufende Mittenebene, umfasst optional die Rotationsachse der Klauenkupplung, wenn kein Winkelversatz vorliegt. Wenigstens eine Radialfläche kann relativ zur Rotationsachse geneigt angeordnet sein. Es ist denkbar, das die Rotationsachse nicht in der Ebene der Radialfläche aber ebenenparallel verläuft. Es ist auch denkbar, das die Radialflächen relativ zueinander einen Ebenwinkel einschließen, also sich insbesondere radial nach innen erstreckend schneiden.

Optional weist wenigstens ein Kupplungselement eine Einsetzöffnung auf, die derart zu einer Außenseite des Kupplungselements geführt ist, dass über sie das Koppelelement in die Koppelbahn eingesetzt werden kann, auch wenn die erste und zweite Klaue in Kämmung stehen. Auf diese Weise können die ersten und zweiten Kupplungselemente, wenn sie miteinander in Kämmung stehen, mit dem Koppelelement versehen werden, wodurch eine Kraftkopplung, insbesondere in Drehmomentenrichtung, zwischen ersten und zweiten Kopplungsteil erfolgt. Optional sind insbesondere Einsetzöffnung und/oder die Koppelbahnen derart ausgebildet, dass bei eingesetztem Koppelelement in seine jeweilige Koppelbahn ein Separieren der ersten und zweiten Kupplungselemente nicht mehr möglich ist. Die Einsetzöffnung ist optional so gewählt, dass nur in einem entlasteten Zustand, beispielsweise ohne Wirken eines Drehmoments, ein Einführen des Koppelelements durch die Einsetzöffnung in die Koppelbahnen möglich ist. Eine solche Einsetzöffnung kann beispielsweise eine Öffnung in der Kupplungselementbasis sein, auf der die Klauen aufgesetzt sind. Eine solche Öffnung kann aber auch eine Öffnung in den Klauen selbst sein, über die das Koppelelement in die Koppelbahn einführbar ist. Optional ist zwischen Einsetzöffnung und Koppelbahn ein Versatz ausgebildet, über den das Koppelelement aktiv hinweggeführt werden muss, um, insbesondere im entlasteten Zustand der Klauenkupplung ein Ausgleiten der Koppelelemente aus den Koppelbahnen zu verhindern.

Optional ist ein Sperrelement vorgesehen, das nach dem Einsetzen des Koppelelements in die Koppelbahn die Einsetzöffnung verschließt, und insbesondere derart verschließt, dass das Koppelelement nicht mehr aus der Führung ausgleiten kann.

Eine solche Einsetzöffnung kann beispielsweise eine Bolzenaufnahme oder dergleichen Verbindungsmittelaufnahme aufweisen, über die das Kupplungselement an der jeweiligen Abtrieb- oder Antriebsachse befestigbar ist. In diesem Zusammenhang kann beispielsweise über die Einsetzöffnung ein Bolzen eingesetzt werden, der dann an einem Achsflansch oder dergleichen Bauteil befestigbar ist. Hier sind sämtliche aus dem Stand der Technik bekannte Verfahren zum Befestigen erster und zweiter Kupplungselemente an Achsen, oder dergleichen kraftübertragenden Wellen, Bauteile, Mittel, denkbar.

Optional sind an den ersten und/oder zweiten Kupplungselementen eine Anzahl n an Klauen vorgesehen, wobei die Anzahl n von der auf die Koppelelemente maximal übertragbaren Hertzschen-Pressung und des zu übertragenden Drehmoments abhängig ist. Optional sind genau vier Klauen vorgesehen, die rotationssymmetrisch über den Außenumfang des jeweiligen Kupplungselements verteilt werden. Es ist denkbar, die einzelnen ersten und zweiten Klauen identisch zueinander auszubilden, es ist aber auch denkbar, die ersten Klauen größer oder kleiner als die zweiten Klauen auszuführen, und insbesondere entlang des Außenumfangs des Kupplungselements breiter oder weniger breit auszuführen.

Optional ist wenigstens ein Kupplungselement mittels eines additiven Fertigungsverfahrens hergestellt. Unter additiver Fertigung wird insbesondere eine 3D-Fertigung oder generative Fertigung verstanden. Additive Fertigungsverfahren basieren auf dem schrittweisen Zufügen von Material zum Erzeugen eines Bauteils, insbesondere ohne die Verwendung von Formen, und optional direkt auf Grundlage von 3D-CAD-Dateien. Es erfolgt optional eine schichtweise Fertigung, indem zunächst eine Ebene des Bauteils gefertigt wird und über das Hinzufügen weiterer Schichten in der dritten Raumrichtung ein dreidimensionales Bauteil entsteht. Dies ist insbesondere bei der Ausführung der Klauen mit den integrierten Kuppelbahnen von Vorteil. Die Kombination der einzelnen Schichten erfolgt optional durch Aufschmelzen und über chemische Aushärteprozesse.

Optional weist wenigstens ein Kupplungselement ein Material auf, das ein optional integriertes Schmiermittel zwischen Koppelelement und Koppelbahn zur Verfügung stellt. Hier sind sämtliche aus dem Stand der Technik bekannte Materialien und insbesondere Materialien mit integrierten Schmiermitteln, denkbar. Auch ist denkbar, ein solches Material zur Ausbildung des Koppelelements zu verwenden.

Es ist denkbar die Koppelbahn integral mit der Klaue herzustellen. Es ist denkbar die Koppelbahnen bei der Fertigung der Klauen und im selben Abreitschritt herzustellen. Es ist auch denkbar, die Koppelbahnen in einem weiteren Arbeitsschritt herzustellen, beispielswiese herauszufräsen.

Im Folgenden wird die Erfindung anhand von Ausführungsbeispielen beschrieben, die durch die beiliegenden Zeichnungen näher erläutert werden. Hierbei zeigen schematisch:
- Fig. 1: eine isometrische Darstellung einer ersten Ausführungsform der Erfindung mit maximalem Axialversatz;
- Figs. 2 und 3: Schnitte der Ausführungsform gemäß Fig. 1;
- Fig. 4: eine isometrische Darstellung der Ausführungsform gemäß Fig. 1 mit minimalem Axialversatz;
- Figs. 5 und 6: Schnitte der Ausführungsform gemäß Fig. 4;
- Fig. 7: eine isometrische Darstellung der Ausführungsform gemäß Fig. 1 mit Winkelversatz;
- Fig. 8: ein Schnitt der Ausführungsform gemäß Fig. 7;
- Fig. 9: eine isometrische Expositionsdarstellung der Ausführungsform gemäß Fig. 1;
- Fig. 10: eine Detailbetrachtung eines ersten Kupplungselementes der Ausführungsform gemäß Fig. 9;
- Fig. 11: einen Radialschnitt durch das Bauteil gemäß Fig. 10 und der dort eingezeichneten Schnittführung;
- Fig. 12: einen Querschnitt durch das Bauteil gemäß Fig. 10 und der dort dargestellten Schnittführung;
- Fig. 13: einen Draufsicht auf die Radialfläche der ersten Klaue der Ausführungsform gemäß Fig. 10; und
- Fig. 14: eine Radialschnitt durch zwei gekoppelte erste und zweite Klauen, der Ausführungsform gemäß Fig. 1.

Im Folgenden werden für gleiche und gleichwirkende Bauteile dieselben Bezugsziffern verwendet, wobei bisweilen Hochindizes ihrer Anwendung finden.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier relevante technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um eine Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angeben, jedoch das Vorhandensein oder das Hinzufügen eines oder mehrerer anderer Merkmale nicht ausschließen. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder - komponenten erfolgen kann, außer es ist anderweitig spezifiziert. Auf den Offenbarungsgehalt aller Publikationen, Patentanmeldungen, Patente und anderer hier erwähnter Literatur wird in seiner Gänze verwiesen. Im Fall eines Konflikts gilt die vorliegende Spezifikation, einschließlich ihrer Definitionen.

Die Erfindung wird hier anhand der beiliegenden Zeichnungen beschrieben, in denen Ausführungsformen der Erfindung gezeigt sind. Die Erfindung kann jedoch auch in vielen verschiedenen Formen ausgeführt sein und sollte nicht so verstanden werden, dass sie auf die hier dargelegten Ausführungsformen beschränkt ist. Vielmehr sind die Ausführungsformen hier angegeben, damit die vorliegende Offenbarung ausführlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben. Beliebige der offenbarten Vorrichtungen oder Teile davon können zusammen kombiniert werden oder in weitere Teile aufgeteilt werden, wenn nicht spezifisch anders angegeben. Die bloße Tatsache, dass bestimmte Maßnahmen in voneinander verschiedenen Abschnitten oder Ansprüchen aufgeführt werden, soll nicht angeben, dass eine Kombination dieser Maßnahmen nicht vorteilhafterweise vorgenommen werden kann. Insbesondere sollen alle denkbaren Kombinationen der Ansprüche als inhärent offenbart betrachtet werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

Aus Gründen der Klarheit und im Sinne einer stringenten Beschreibung werden Merkmale hier meist als ein Teil einer oder getrennter Ausführungsformen beschrieben; es versteht sich jedoch von selbst, dass der Umfang der Erfindung auch Ausführungsformen enthalten kann, die Kombinationen aller oder einiger der beschriebenen Merkmale aufweisen.

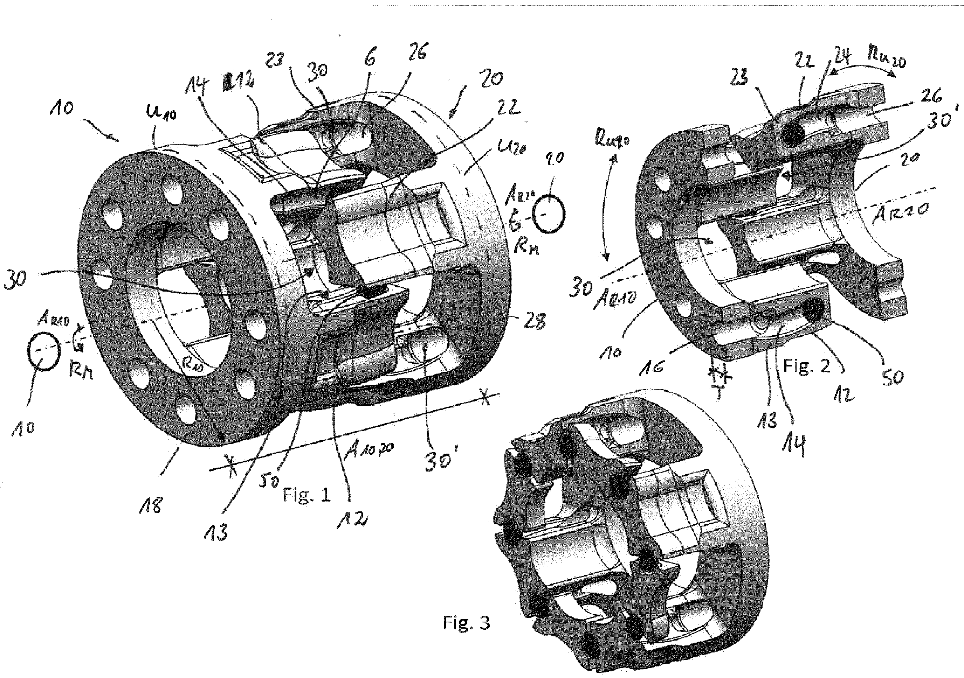

Die Figs. 1 bis 13 zeigen dieselbe Ausführungsform der erfindungsgemäßen Klauenkupplung in unterschiedlichen Darstellungen und Betriebszuständen. Die unterschiedlichen Betriebszustände sind in den Figs. 1 bis 3 (maximaler Achsversatz), 4 bis 6 (minimaler Achsversatz) und 7 und 8 (Winkelversatz) visualisiert.

Zur Kompensation all dieser Betriebszustände weist die erfindungsgemäße Klauenkupplung erste und zweite Kupplungselemente 10, 20 auf, die optional identisch zueinander ausgebildet sind.

Die beiden ersten und zweiten Kupplungselemente 10, 20 weisen eine Kupplungselementbasis 18, 28 auf, auf der jeweils erste Klauen 12 bzw. zweite Klauen 22 angeordnet sind. Die Klauen sind hier optional rotationssymmetrisch um die jeweilige Rotationsachse verteilt, insbesondere auf einem ersten Außenumfang U10 bzw. einem zweiten Außenumfang U20 verteilt ausgebildet. Dieser Außenumfang kann sich, wie hier, am Randbereich der Kupplungselementbasis erstrecken.

Diese Klauen stehen aus der Kupplungselementbasis 19, 29 in Richtung dem gegenüberliegenden Kupplungselement 10, 20 bzw. 20, 10 bzw. in Richtung der jeweiligen Rotationsachsen A_{R10}, A_{R20} hervor. Bei null Winkelversatz, wie in den Fig. 1 - 6 dargestellt, verlaufen diese Rotationsachsen A_{R10}, A_{R20} coaxial zu der Rotationsachse der Klauenkupplung.

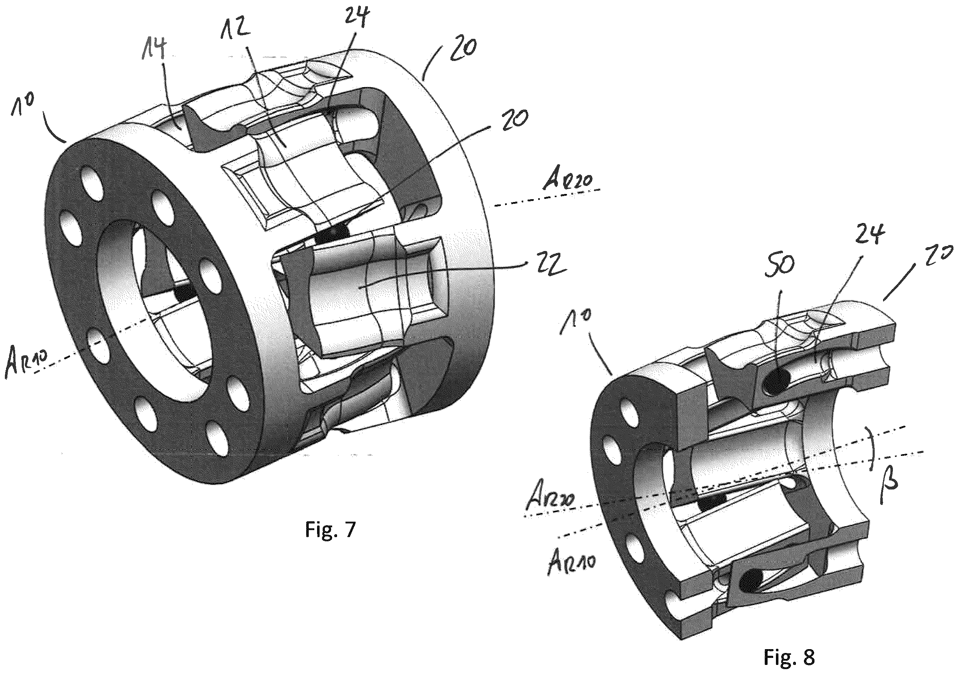

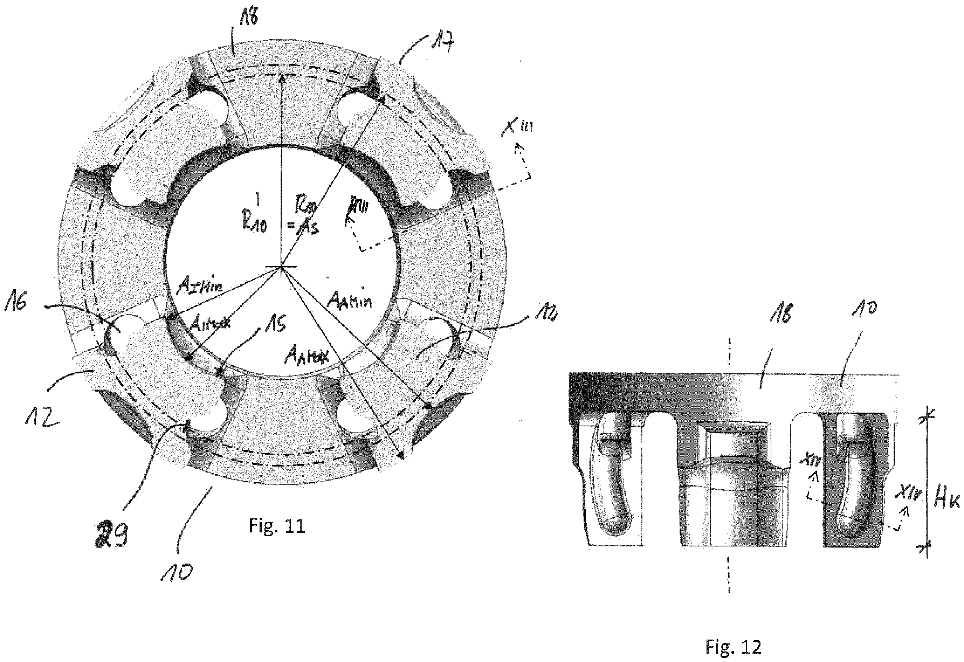

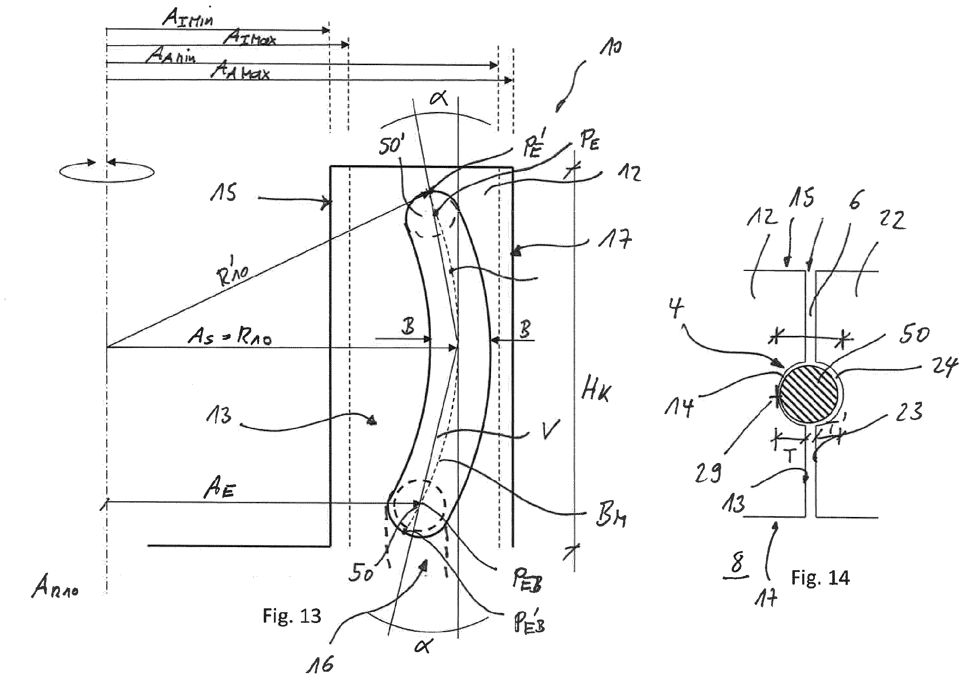

Wie in Figs. 12 und 13 dargestellt, weisen die ersten und/oder die zweiten Klauen jeweils eine Höhe H_{K} auf. Die ersten und zweiten Klauen 12, 22 erstrecken sich, wie erwähnt, jeweils in einer Axialrichtung A_{R10}, A_{R20}, die hier von den jeweiligen Kupplungselementen 10, 20 gebildet wird. Bei der in den Figs. 1 bis 3 dargestellten Ausführungsform liegen die beiden Rotationsachsen A_{R10} und A_{R20} auf einer gemeinsamen Rotationsachse. Bei dem Betriebszustand mit Winkelversatz gemäß Figs. 7 und 8 liegen die beiden Rotationsachsen A_{R10} und A_{R20} zueinander geneigt, und insbesondere um den Winkelsatz β zueinander geneigt. Es ist natürlich eine Kombination zwischen Axialversatz, wie er beispielsweise in den Figs. 1 bis 6 dargestellt ist, und Winkelversatz, wie er in den Figs. 7 bis 8 dargestellt ist, möglich und durch die erfindungsgemäße Klauenkupplung kompensierbar.

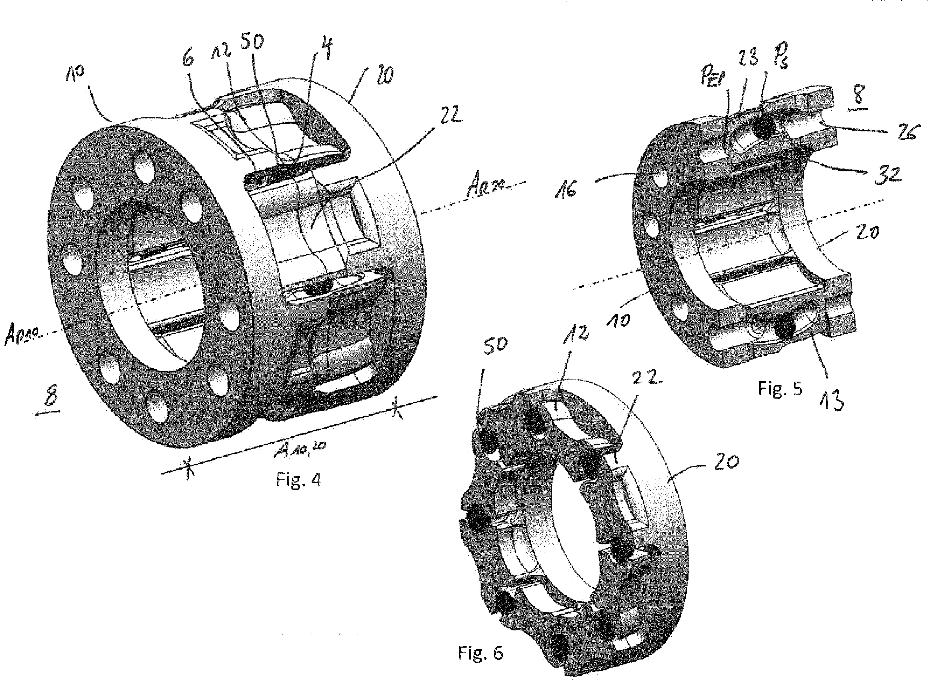

Die ersten und zweiten Klauen 12, 22 stehen, wie in den Figs. 1 bis 8 dargestellt, miteinander in Kämmung, das heißt, sie sind relativ zueinander in Freiräume 30, die zwischen den einzelnen ersten Klauen und den einzelnen zweiten Klauen gebildet werden, eingesetzt. Zwischen den einzelnen Klauen bildet sich ein Luftspalt 6 der Dicke d, um eine Relativbewegung der ersten und zweiten Kupplungselemente 10, 20 zu erlauben (siehe Fig. 4 und 14).

Um ein Drehmoment R_{M} zwischen der Rotationsachse A_{R10} und A_{R20} bzw. dem ersten Kupplungselement 10 und dem zweiten Kupplungselement 20 zu übertragen, sind an einer Mehrzahl in Umfangsrichtung R_{U10}, R_{U20} (siehe Fig. 2) sich gegenüberliegenden ersten und zweiten Radialflächen 13, 23, der benachbarten ersten und zweiten Klauen 12, 22, erste und zweite Koppelelementaufnahmen 14, 24 ausgebildet. Diese ersten und zweiten Koppelelementaufnahmen sind als axial verlaufende und in Radialrichtung gekrümmte Koppelbahnen 14, 24 ausgebildet. In Radialrichtung bedeutet, wie dies beispielsweise in Fig. 1 dargestellt ist, in einer Richtung R₁₀ orthogonal zur Rotationsachse. In Axialrichtung bedeutet hier coaxial zur jeweiligen Rotationsachse des Kupplungselementes auf dem die jeweilige Klaue ausgebildet ist.

Die ersten und zweiten Koppelbahnen 14, 24 bzw. die relative Anordnung der gekrümmten Koppelbahnen, bilden zusammen einen Aufnahmeraum bzw. eine Führung 6 in denen wenigstens ein Koppelelement 50, hier optional genau eine Kugel 50 lagerbar und wenigstens in Axialrichtung A_{R10}, A_{R20} frei bewegbar gelagert ist. In Axialrichtung frei bewegbar gelagert bedeutet, dass es im Wesentlichen entlang der Rotationsachse des jeweiligen Kupplungselementes entlanggleiten kann. Aufgrund der gekrümmten Ausbildung der Koppelbahnen wird diese Axialbewegung mit einer Radialbewegung in Bezug auf die Rotationsachse kombiniert. Die Bewegbarkeit entspricht optional einer Bewegbarkeit in Richtung der gekrümmten Achse der Koppelbahnen. Bei einer Relativbewegung der ersten und zweiten Kupplungselemente 10, 20 erfährt das in den Koppelbahnen 14, 24 bzw. Führung 6 angeordnete Koppelelement 50 insofern also eine relative Axialbewegung und eine relative Radialbewegung in Bezug auf die Rotationsachse A_{R10} bzw. A_{R20}.

Erfindungsgemäß ist das Koppelelement in den Koppelbahnen derart ausgebildet, dass eine kraftschlüssige Kopplung zwischen ersten und zweiten Kupplungselement erfolgt. Die Kraftschlüssig Kopplung ist derart ausgebildet, das ein Drehmoment, wirkend auf das erste Kupplungselement und das zweite Kupplungselement übertragen werden kann, oder umgekehrt. Die Kraftübertragung erfolgt optional rein über Druck bzw. Normalkräfte. Hinsichtlich maximaler Kraftübertragung ist die Hertzsche Pressung relevant. Optional wirken zwischen den beiden Kupplungselementen keine weiteren Kräfte und insbesondere Rückstellkräfte.

In dem in den Figs. 1 bis 3 dargestellten Betriebszustand der Klauenkupplung ist ein maximaler Axialversatz der ersten und zweiten Kupplungselemente 10, 20 dargestellt. Bei dieser Ausführungsform sind die ersten und zweiten Klauen 12, 22 maximal aus den zwischen den jeweiligen ersten und zweiten Klauen gebildeten Freiräumen 30 ausgerückt.

Die in den Koppelbahnen 14, 24 angeordneten Koppelelemente 50 befinden sich in diesem Zustand optional in den freien Endbereichen der Klauen, also in einem Maximalabstand von der jeweiligen Kupplungselementbasis 18, 28.

Ein anderer Betriebszustand mit einer entgegengesetzten Positionierung der ersten und zweiten Kupplungselemente 10, 20 findet sich in den Figs. 4 bis 6, wobei hier die jeweiligen ersten und zweiten Klauen 12, 22 maximal in die jeweiligen Freiräume 30 zwischen den je einzelnen Klauen eingerückt sind. Die Koppelelemente befinden sich in diesem Betriebszustand noch von den fußseitigen Endbereichen der Koppelbahnen entfernt. Insbesondere befinden sie sich im Bereich des Scheitelpunkts Ps (siehe Fig. 13). Optional ist die Kugelbahn derart ausgebildet, dass bei minimalem Achsversatz das Koppelelement um wenigstens drei Durchmesserlängen des Koppelelements, optional wenigstens zwei Durchmesserlängen des Koppelelements, bevorzugt optional wenigstens eine Durchmesserlänge des Koppelelements, von einem kupplungselementbasisseitigen Endpunkt P_{Eb} entfernt angeordnet ist.

Optional ist dieser kupplungselementbasisseitige Endpunkt derart ausgewählt, dass er in direkter Verbindung zu einer Einsetzöffnung 16, 26 steht, die derart zu einer Außenseite 8 (siehe u. a. Fig. 5) geführt ist, dass über sie das Koppelelement in die Koppelbahn 14, 24 eingesetzt werden kann, auch wenn die erste und zweite Klaue in Kämmung steht. Bei dieser Ausführungsform ist optional zwischen den Koppelbahnen 14, 24 und der dazugehörigen Einsetzöffnung 16, 26 ein Versatz 32 vorgesehen, der ein unbeabsichtigtes Ausgleiten des Koppelelements im temporären Montagezustand, also bevor die Klauenkupplung an den jeweiligen Antriebs- bzw. Abtriebsachsen montiert ist, verhindern soll.

Die Einsetzöffnungen 16, 26 sind bei dieser Ausführungsform als Bolzenaufnahme oder dergleichen Verbindungselementaufnahme ausgebildet, über die das jeweilige Kupplungselement 10, 20 an einer Abtriebs- bzw. Antriebsachse befestigbar ist.

Es ist denkbar, die ersten und zweiten Kupplungselemente aus einem Material herzustellen, und insbesondere ein Material im Bereich der Koppelbahnen vorzusehen, das eine Schmierung zwischen Koppelbahn und Koppelelement zur Verfügung stellt. Auch ist es denkbar, das Koppelelement aus einem solchen Material herzustellen. Natürlich können auch externe Schmierungsmittel, Schmierungsschichten etc., aufgetragen werden.

Wie insbesondere in den Figs. 2 und 5 dargestellt, sind die Radialflächen 13, 23, in denen die gekrümmte Koppelbahn 14, 24 ausgebildet ist, plan. Darüber hinaus können diese Radialflächen zueinander parallel ausgebildet sein. Auch ist es denkbar, dass eine mittig zwischen diesen Radialflächen aufgespannte Ebene durch die Rotationsachse des dazugehörigen Kupplungselements verläuft. Die Radialflächen, insbesondere bei parallel zueinander ausgebildeten Radialflächen, schneiden optional die Rotationsachse A_{R10}, A_{R20} des jeweiligen Kupplungselements nicht.

Bei dem in den Figs. 7 bis 8 dargestellten Betriebszustand ist, wie bereits erwähnt, ein Winkelversatz um den Winkel ßzwischen dem ersten Kupplungselement 10 und dem zweiten Kupplungselement 20 vorhanden, der, u.a. aufgrund der zwängungsfreien Lagerung des Koppelelements 50, in den jeweiligen Koppelbahnen 14, 24 kompensierbar ist.

In allen drei Betriebszuständen ist eine sichere Drehmomentenübertragung gewährleistet.

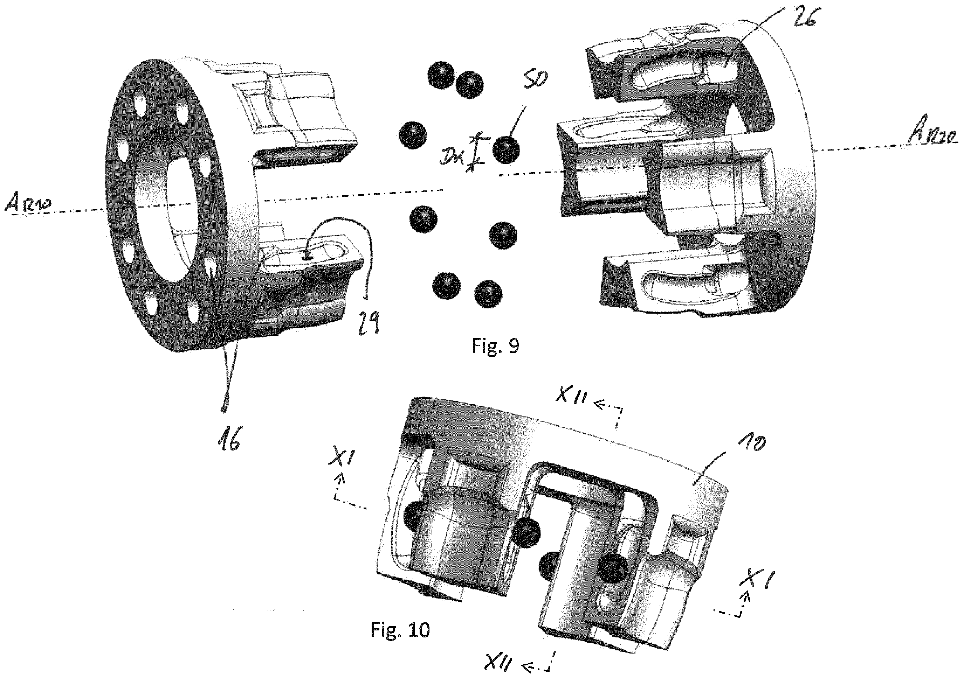

Die Figs. 10 bis 13 zeigen das erste Kupplungselement 10, wie es in den Figs. 1 bis 9 in verschiedenen Ansichten dargestellt ist, im Detail. Identisches gilt aber optional identisch für das zweite Kupplungselement 20.

Wie insbesondere in den Figs. 11 bis 13 dargestellt, gilt optional, dass der Radius R₁₀, R₂₀ der gekrümmten Koppelbahn größer ist als ein minimaler Innenabstand A_{IMin} einer Innenwandung der Klaue von der Rotationsachse A_{R10}, A_{R20} des Kupplungselementes und/oder kleiner ist als ein maximaler Außenabstand A_{AMax} einer Außenwandung der Klaue von der Rotationsachse A_{R10}, A_{R20} des Kupplungselementes, optional derart, dass der Radius R₁₀, R₂₀ der gekrümmten Koppelbahn größer ist als ein maximaler Innenabstand A_{IMAx} einer Innenwandung der Klaue von der Rotationsachse A_{R10}, A_{R20} des Kupplungselementes, weiter optional um wenigstens 10% größer und/oder kleiner ist als ein minimaler Außenabstand einer Außenwandung der Klaue von der Rotationsachse des Kupplungselementes, weiter optional um wenigstens 10% kleiner ist.

Weiter ist insbesondere in Fig. 14 dargestellt, dass ein Scheitelpunkt Ps der Koppelbahn 14 ein Punkt auf der gekrümmten Haupterstreckungsachse B_{M} der Koppelbahn ist, der zur Rotationsachse A_{R10} des Kupplungselements 10 den größten Abstand As aufweist. Dem gegenübergestellt ist ein Endpunkt P_{E} der Koppelbahn 14, der ein Punkt auf der gekrümmten Haupterstreckungsachse B_{M} der Koppelbahn ist, der zur Rotationsachse A_{R10} des Kupplungselements den geringsten Abstand A_{E} aufweist. Bei dieser Ausführungsform, wie sie in Fig. 13 dargestellt ist, sind zwei optionale Endpunkte P_{E} dargestellt, wobei der untere Endpunkt P_{E} in direkter Verbindung zur zuvor beschriebenen Einsetzöffnung 16 angeordnet ist. Beide Ausführungsformen sind möglich. Der (hier in Zeichnungsebene unten) dargestellte Endpunkt wird als kupplungselementbasisseitiger Endpunkt P_{Eb} bezeichnet.

Es ist denkbar, dass eine Verbindungsgerade V (siehe Fig. 13) durch diese beiden Punkte P_{S}, P_{E} bzw. P_{S}, P_{Eb} in einem Winkel α auf die Rotationsachse A_{R10} zu- bzw. von dieser weggeneigt verläuft. Dieser Winkel α kann beispielsweise dem maximal geforderten Winkelversatz β der beiden Kupplungselemente 10, 20 im Betrieb entsprechen. Er kann optional maximal 10°, weiter optional maximal 8° betragen.

Wie ebenfalls in Fig. 13 dargestellt und zuvor erwähnt, kann ein Durchmesser D_{K} (siehe Fig. 9) des Koppelelements 50 kleiner sein als eine minimale Breite B der Koppelbahn 14, 24, insbesondere gemessen orthogonal zu einer Mittellängsachse B_{M} in Richtung Krümmungsradius R₁₀ der gekrümmten Koppelbahn. Auch kann die Breite B optional als Abstand der beiden Seitenwandungen der Koppelbahn im Schnittpunkt mit der Radialfläche definiert sein (siehe Fig. 13). Optional kann der Durchmesser D_{K} um maximal 10 %, weiter optional um maximal 5 %, im Besonderen optional maximal 2 %, kleiner sein.

Eine weiter mögliche Definition der Abmessungen von Koppelelement 50 und Koppelbahn 14, 24 ist kann über die optionale Bedingung getroffen werden, dass der Durchmesser D_{K} des Koppelelements 50 kleiner ist als ein Minimalabstand A_{T} von gegenüberliegenden Tiefstbereichen 29, erster und zweiter Koppelbahnen 14, 24. Diese Tiefstbereiche 29 sind beispielsweise in Figs. 2 und 14 dargestellt. Sie umfassen den maximalen Abstand der Innenwandung der Koppelbahn zu einer in der Radialfläche aufgespannten Ebene. Die dazugehörige jeweilige Tiefe der Koppelbahnen ist mit dem Bezugszeichen T bezeichnet (siehe Fig. 14).

### Bezugszeichen

- 1: Klauenkupplung
- 4: Führung
- 6: Luftspalt
- 7: Minimalabstand gegenüberliegender Tiefstbereiche
- 8: Außenseite
- 10: erstes Kupplungselement
- 11: Antrieb
- 12: erste Klaue
- 13: Radialfläche
- 14: Koppelelementaufnahme bzw. Koppelbahn
- 15: Innenwandung
- 16: Einsetzöffnung
- 17: Außenwandung
- 18: Kupplungselementbasis
- 19: Tiefstbereich
- 20: zweites Kupplungselement
- 21: Abtrieb
- 22: zweite Klaue
- 23: Radialfläche
- 24: Koppelelementaufnahme bzw. Koppelbahn
- 26: Einsetzöffnung
- 28: Kupplungselementbasis
- 29: Tiefstbereich
- 30: Freiräume
- 50: Koppelelement
- A_{R10}: Axialrichtung bzw. Rotationsachse
- A_{R20}: Axialrichtung bzw. Rotationsachse
- A_{10,20}: Abstand der Kupplungselemente
- A_{Amax}: maximaler Außenabstand
- A_{Amin}: minimaler Außenabstand
- A_{IMin}: minimaler Innenabstand
- A_{IMax}: maximaler Innenabstand
- A_{T}: Minimalabstand gegenüberliegender Tiefstbereiche
- A_{S}: größter Abstand
- A_{E}: geringster Abstand
- B: minimale Breite
- B_{M}: gekrümmte Haupterstreckungsachse
- d: Dicke des Luftspalts
- D_{K}: Durchmesser des Koppelelements
- H_{K}: Höhe einer Klaue
- P_{E}: Endpunkt
- P_{Eb}: kupplungselementbasisseitiger Endpunkt
- P_{S}: Scheitelpunkt
- R_{M}: Drehmoment(-Richtung)
- R_{U10}: Umfangsrichtung
- R_{U20}: Umfangsrichtung
- R₁₀: Radius gekrümmte Koppelbahn
- R₂₀: Radius gekrümmte Koppelbahn
- T: Tiefe
- U₁₀: erster Außenumfang
- U₂₀: zweiter Außenumfang
- V: Verbindungsgerade

## Patentansprüche

1. Klauenkupplung zur Übertragung von Drehmomenten von einem Antrieb (11) zu einem Abtrieb (21), mit einem, dem Antrieb (11) zugeordneten ersten Kupplungselement (10), das über einen ersten Außenumfang (U₁₀) verteilte und zueinander beabstandete erste Klauen (12) trägt, und einem, dem Abtrieb (21) zugeordneten zweiten Kupplungselement (20), das optional über einen zweiten Außenumfang (U₁₀) verteilte und zueinander beabstandete zweite Klauen (22) trägt, wobei sich die ersten und zweiten Klauen (12, 22) jeweils in einer Axialrichtung A_{R10}, _{AR20} erstrecken und abwechselnd miteinander in Kämmung stehen, wobei an einer Mehrzahl in Umfangsrichtung R_{U10}, R_{U20} sich gegenüberliegenden ersten und zweiten Radialflächen (13, 23), der benachbarten ersten und zweiten Klauen (12, 22), erste und zweite Koppelelementaufnahmen (14, 24) ausgebildet sind, in denen wenigstens ein, optional genau ein Koppelelement (50) sitzt, das die jeweiligen ersten und zweiten Kupplungselemente (10, 20) in Drehmomentrichtung R_{M10}, R_{M20} kraftschlüssig miteinander koppelt,
**dadurch gekennzeichnet, dass**
die ersten und zweiten Koppelelementaufnahmen (14, 24) als axial verlaufende und in Radialrichtung gekrümmte Koppelbahnen (14, 24) ausgebildet, in denen das Koppelelement (50) wenigstens in Axialrichtung A_{R10}, _{AR20} frei bewegbar gelagert ist.

2. Klauenkupplung nach Anspruch 1,
**dadurch gekennzeichnet, dass**
die gekrümmte Koppelbahn (14, 24) in einem Bogen, optional in einem Kreisbogen verläuft, und insbesondere einem Kreisbogen, dessen Mittelpunkt auf der Rotationsachse A_{R10}, _{AR20} des Kupplungselementes (10, 20) liegt.

3. Klauenkupplung nach Anspruch 1 oder 2
**dadurch gekennzeichnet, dass**
das Koppelelement (50) als Kugel (50), insbesondere aus Metall oder Keramik ausgebildet ist.

4. Klauenkupplung nach einem der vorhergehenden Ansprüche,
**dadurch gekennzeichnet, dass**
der Radius R₁₀, R₂₀ der gekrümmten Koppelbahn (14, 24) größer ist als ein minimaler Innenabstand A_{IMin} einer Innenwandung (15) der Klaue (12, 22) von der Rotationsachse A_{R10}, A_{R20} des Kupplungselementes (10,20) und/oder kleiner ist als ein maximaler Außenabstand A_{AMax} einer Außenwandung (17) der Klaue (12,22) von der Rotationsachse A_{R10}, A_{R20} des Kupplungselementes (10, 20), optional derart, dass der Radius R₁₀, R₂₀ der gekrümmten Koppelbahn (14,24) größer ist als ein maximaler Innenabstand A_{IMAx} einer Innenwandung (15) der Klaue (12, 22) von der Rotationsachse A_{R10}, A_{R20} des Kupplungselementes (10,20), weiter optional um wenigstens 10% größer und/oder kleiner ist als ein minimaler Außenabstand einer Außenwandung der Klaue (12, 22) von der Rotationsachse des Kupplungselementes (10, 20), weiter optional um wenigstens 10% kleiner ist.

5. Klauenkupplung nach einem der vorhergehenden Ansprüche,
**dadurch gekennzeichnet, dass**
ein Scheitelpunkt Ps der Koppelbahn (14, 24) ein Punkt auf einer Mittelachsenbahn B_{M} der Koppelbahn (14, 24) ist, der zur Rotationsachse A_{R10}, A_{R20} des Kupplungselementes (10, 20) den größten Abstand As aufweist, und ein Endpunkt P_{E} der Koppelbahn (14, 24) ein Punkt auf einer Mittelachsenbahn B_{M} der Koppelbahn (14, 24) ist, der zur Rotationsachse A_{R10}, A_{R20} des Kupplungselementes (10, 20) den geringsten Abstand A_{E} aufweist, wobei optional eine Verbindungsgerade V durch diese beiden Punkte Ps, P_{E} in einem Winkel α auf die Rotationsachse A_{R10}, A_{R20} zu bzw. von dieser weg geneigt verläuft, und wobei dieser Winkel α im Wesentlichen dem maximalen geforderten Winkelversatz β der beiden Kupplungselemente (10, 20) im Betrieb entspricht, optional maximal 10°, weiter optional maximal 8° entspricht.

6. Klauenkupplung nach einem der vorhergehenden Ansprüche,
**dadurch gekennzeichnet, dass**
ein Durchmesser D_{K} des Koppelelementes (50) kleiner ist als eine minimale Breite B der Koppelbahn (14, 24), insbesondere gemessen orthogonal zu einer Mittelachsenbahn B_{M} in Richtung Krümmungsradius R₁₀, R₂₀ der gekrümmten Koppelbahn (14, 24), optional um maximal 10%, weiter optional um maximal 5%, im Besonderen optional um maximal 2% kleiner ist.

7. Klauenkupplung nach einem der vorhergehenden Ansprüche,
**dadurch gekennzeichnet, dass**
die Klauen (12, 22) derart ausgebildet sind, dass sie im kämmenden Zustand zwischen sich einen Luftspalt (6) mit der Dicke d bilden, wobei gilt: Dicke d des Luftspaltes = Summe der Tiefen T der sich gegenüberliegenden Koppelbahnen (14, 24) - Durchmesser des Koppelelementes (50).

8. Klauenkupplung nach einem der vorhergehenden Ansprüche,
**dadurch gekennzeichnet, dass**
ein Durchmesser des Koppelelementes (50) kleiner ist als ein Minimalabstand (7) von gegenüberliegenden Tiefstbereichen (19, 29) erster und zweiter Koppelbahnen und/oder dass das Koppelelement einen geringeren Umfang hat als ein von den beiden sich gegenüberliegenden Koppelbahnen eingeschlossener Führungsraum.

9. Klauenkupplung nach einem der vorhergehenden Ansprüche,
**dadurch gekennzeichnet, dass**
die Radialfläche (13, 23), in denen die gekrümmte Koppelbahn (14, 24) ausgebildet ist, plan ist, und/oder parallel zueinander ausgebildet sind, wobei eine mittig zwischen diesen Radialflächen (13, 23) aufgespannte Ebene durch die Rotationsachse A_{R10}, A_{R20} des dazugehörigen Kupplungselementes (10, 20) verläuft.

10. Klauenkupplung nach einem der vorhergehenden Ansprüche,
**dadurch gekennzeichnet, dass**
wenigstens ein Kupplungselement (14, 24) eine Einsetzöffnung (16, 26) aufweist, die derart zu einer Außenseite (8) der Kupplungselementes (10, 20) geführt ist, dass über sie das Koppelelement in die Koppelbahn (14, 24) eingesetzt werden kann, auch wenn die erste und zweite Klaue (12, 22) in Kämmung stehen.

11. Klauenkupplung nach einem der vorhergehenden Ansprüche, insbesondere Anspruch 10,
**dadurch gekennzeichnet, dass**
die Einsetzöffnung (16, 26) eine Bolzenaufnahme oder dergleichen Verbindungsmittelaufnahme aufweist, über die das Kupplungselement (10, 20) an der jeweiligen Abtrieb- oder Antriebsachse befestigbar ist.

12. Klauenkupplung nach einem der vorhergehenden Ansprüche,
**dadurch gekennzeichnet, dass**
wenigstens ein Kupplungselement (10, 20) mittels eines additiven Fertigungsverfahrens hergestellt ist.

13. Klauenkupplung nach einem der vorhergehenden Ansprüche,
**dadurch gekennzeichnet, dass**
wenigstens ein Kupplungselement (10, 20) ein Material aufweist, das ein optional integriertes Schmiermittel zwischen Koppelelement und Koppelbahn (14, 24) zur Verfügung stellt.
